# EUROPEAN PATENT SPECIFICATION

(11) **EP 1 767 034 B1**
(45) Date of publication and mention of the grant of the patent: **17.08.2011**
(21) Application number: 05740007.9
(22) Date of filing: 09.05.2005
(51) Int. Cl.: H04W 8/12

(54) **METHOD FOR OBTAINING CROSS-NETWORK ACCESSIBLE INFORMATION ON A MOBILE COMMUNICATIONS SYSTEM**
VERFAHREN ZUM ERHALTEN VON NETZWERKÜBERGREIFEND ZUGÄNGLICHEN INFORMATIONEN AUF EINEM MOBILKOMMUNIKATIONSSYSTEM
PROCEDE D'OBTENTION D'INFORMATIONS ACCESSIBLES SUR PLUSIEURS RESEAUX POUR UN SYSTEME DE COMMUNICATION MOBILE

(30) Priority: 18.06.2004 GB 0413628
(43) Date of publication of application: 28.03.2007
(73) Proprietor: TynTec Ltd., Douglas Isle of Man IM1 1EA (GB)
(72) Inventor: Kunz, Ralph Eric, 65183 Wiesbaden (DE); Trapp, Thorsten, 58095 Hagen (DE)
(74) Representative: Harrison, Robert John
(86) International application number: PCT/EP2005/005126
(87) International publication number: WO 2005/125251

(56) References cited:
- EP-A- 0 853 287
- WO-A-02/073470
- US-A- 6 064 887
- US-A1- 2004 076 139
- US-B1- 6 343 318
- US-B1- 6 778 987

## Description

### Field of the Invention

The invention relates to a method and apparatus for obtaining cross-network accessible information in a mobile communications system, such as a cellphone telephone network, which comprises networks of interlinked telecommunications systems.

### Prior Art

Mobile telecommunications systems have become increasingly popular over the past few years. There are currently two standards in widespread use, the CDMA standard used in North America, Japan, Korea and Chile, and the GSM standard used, for example, in Europe, Australasia and Africa. A third generation of mobile telecommunications system, known as UMTS, is currently being introduced into many countries.

The advantage of a mobile communication network, e.g. a GSM system (GSM, Global System for Mobile Communications) as compared with a public switched telephone network (PSTN, Public Switched Telephone Network) is the mobility management. In this application, a mobile communication network is advantageously used to mean a digital mobile network. The mobile communication network not only enables a user to make and receive phone calls anywhere in the coverage area of the network to which the user of the mobile station has subscribed to (for simplicity called "home network"), it also allows the user to make and receive phone calls any where in the coverage area of other networks (for simplicity called "connected networks") with which the network operator of the home network has implemented roaming agreements (usually called IR.21 agreements according to the GSM Association standards). Assuming a range of active roaming agreements between the home network and other networks, a mobile station will have access to an interlinked network of telecommunication networks, comprising its home network and various connected networks. Since roaming agreements are usually bilateral, all active subscribers of connected networks will be able to make phone calls to and receive phone calls from subscribers of the home network.

The typical mobile telecommunications system has a particular geographic area covered by a network operator. The geographic area can correspond either to a country (as is usual in Europe) or a region (as is more common in the United States). There may be more than one network operator in any one geographic area.

The geographic area is divided into cells, often drawn as hexagons for ease of design and cell planning, but which are in fact of irregular size and shape. Each cell has an antenna for transmitting and receiving radio signals from the various mobile stations ("MS") within the coverage area of the cell. The mobile stations can be, for example, handsets, computer data cards, vehicle identifiers, asset identifiers, road toll collection equipment, etc. The mobile station is the physical equipment used by a subscriber to gain access to the Public Land Mobile Network ("PLMN"), which is a mobile network for a given network operator. The PLMN is established and operated by an administration or its licensed network operators for the specific purpose of providing land mobile communication services to the public.

Every telephone network needs a certain structure in order to route incoming calls to the correct exchange and finally to the called subscriber. In a mobile network this structure is of even greater importance because of the mobility of its subscribers. The links between the PLMN network and the Public Switched Telephone Network (PSTN) or Integrated Services Digital Network (ISDN) is at the level of international or national transit exchanges. All incoming calls for a PLMN network from a PSTN will be routed to one or more Gateway Mobile Switching Centres ("Gateway MSC" or "GMSC"). A Gateway MSC works as an incoming transit exchange for the PLMN. The GMSC enables the system to route calls to their final destination, i.e. to the mobile stations.

A Mobile Switching Centre ("MSC") area represents that part of the network (termed an MSC area) that is covered by one MSC. In order to route a call to a mobile station, the path through the PLMN links to the MSC in the MSC area where the subscriber is currently located.

A Service Area ("SA") is the part of the network that is defined as an area in which a mobile station (MS), such as a telephone handset, is obtainable, due to the fact that the MS is registered in a Visitor Location Register ("VLR"). The VLR is a database commonly located in the MSC (and referred to as MSC/VLR) temporarily containing information about all the mobile stations currently located in the MSC area. As soon as an MS roams into a new MSC area, the VLR connected to that MSC will request data about the MS from the Home Location Register ("HLR"). The VLR contains both subscriber information (received from the HLR) and information relating to the Location Area in which the MS is currently situated.

The HLR is also a database. When someone buys a subscription from an operator, the purchaser will be registered in the HLR of that operator. The HLR contains subscriber information, such as supplementary services and authentication parameters. The subscriber of each network operator has a unique mobile phone number (MSISDN=Mobile Subscriber ISD Number) under which he can be called. This MSISDN contains a country and a network operator prefix, e.g., +49 172 for Germany, D2 Vodafone.

Furthermore, there will be information about the location of the MS, i.e. in which MSC area the MS is currently to be found. This information changes as the MS moves around. The MS will send location information (via the MSC/VLR) to its HLR, thus providing means to receive a call.

In many systems the PLMN will be divided into one or several MSC/VLR Service Areas (it is often the case that the MSC Area and the Service Area cover exactly the same part of the network, while the MSC and VLR are implemented in the same node). Each MSC/VLR Service Area is divided into several Location Areas ("LA"). An LA is a part of the MSC/VLR Service Area in which a mobile station may move freely without updating location information to the MSC/VLR exchange that controls the LA. It is also the area where a paging message is broadcast in order to find the called mobile subscribe. An LA can have several cells and depend on one or more Base Station Controllers ("BSC"), but it belongs to only one MSC/VLR. It can also be identified by the system by using a Location Area Identity ("LAI").

The Location Area is divided into a number of Cells. The cell is an area of radio coverage that the network identifies with the Cell Global Identity ("CGI"). The MS distinguishes between cells using the same carrier frequencies by use of the Base Station Identity Code ("BSIC").

It is often the case that a Subscriber A, calling from e.g. the PSTN, wishes to call a Subscriber B in a particular PLMN (e.g. in a network using the GSM standard). The connection is set up from Subscriber A's local exchange to the Gateway MSC of the GSM/PLMN network. The GMSC analyzes the number for Subscriber B. Using an interrogation function; the GMSC sends the Mobile Station ISDN ("MSISDN") number, with a request for a Mobile Station Roaming Number ("MSRN"), to the Home Location Register. The MSISDN is a number which uniquely identifies a mobile telephone subscription in the PSTN numbering plan. The HLR knows what Service Area Subscriber B is located in and translates the dialled mobile subscriber number (e.g. MSISDN) into a GSM/PLMN subscriber identity (e.g IMSI - International Mobile Subscriber Identity): i.e. MSISDN - > IMSI.

In order to provide a temporary number for routing, the HLR sends the IMSI of Subscriber B to the current MSC/VLR and requests it to temporarily allocate a MSRN to Subscriber B and return it. At reception of the MSRN, the HLR sends it to the GMSC, which can now route the call to the MSC/VLR exchange where the called subscriber is currently registered.

The GSMC, now in possession of the correct MSRN, can now set up the incoming call to the Service Area where subscribe B is currently located.

The VLR points out the Location Area Identity ("LAI") for the called subscriber. i.e. IMSI- > LAI. The MSC/VLR then sends a paging message to all transmitters within the Location Area.

The mobile station may be idle and listening to the paging channel of one of the cells belonging to the Location Area. It will receive the paging message, recognize the IMSI and send a response. After the call set-up, procedures are performed and the assignment of a traffic channel is done, the call is connected over the air path to the mobile station.

It is, however, possible that the mobile station is turned off. It is considered "detached". The mobile system cannot be reached by the network, because it does not respond to a paging message. It furthermore does not inform the system about possible changes of location area. A mobile station that is turned on is called "attached".

Both attach and detach are related to the International Mobile Subscriber Identity ("IMSI"). For a correct identification over the radio path and through the GSM/PLMN network, a specific identity is allocated to each subscriber. This identity is the IMSI and is used for all signalling within the PLMN. It is stored in the Subscriber Identity Module (SIM). The SIM is usually implemented as a smart card located in the MS. The IMSI is also stored in the HLR, system registration, and in the event of roaming, temporarily in the VLR.

The IMSI consists of 3 parts, a Mobile Country Code ("MCC"), a Mobile Network Code ("MNC"), and a Mobile Station Identification Number.

As mentioned above, a mobile station in an active state is marked "attached" by a flag on the IMSI. When the MS powers off, the MS sends a last message to the network, containing a request for the detach procedure. On reception of a "detached" message, the MSC/VLR marks the corresponding IMSI flag "detached". Only the VLR is updated with the "detached" information whereas the HLR is not informed.

If the MS sends an "IMSI detach" message to the system, and the radio link quality is too bad, the system might not be able to decode the information. Since no acknowledgement is sent to the MS, no further attempt is made. This means that the system will regard the MS as attached. Therefore, the MS is forced to register periodically, e.g. every 30 minutes.

This is called "periodic registration". If the system does not receive the periodic registration it will mark the MS "detached" in its VLR, a procedure known as "implicit detach". This can also occur when the MS roams outside the coverage area of the PLMN and is m longer able to register periodically.

In the case where the Subscriber B is detached, either IMSI detached or implicitly detached, then Subscriber A will not be able to complete his call to Subscriber B. When the MS is marked detached the call attempt by Subscriber A is usually routed to a message service.

There is often a need to obtain information about the status of a mobile subscriber. Whilst this is relatively easy in the home network of the mobile subscriber, it is substantially more complicated when the mobile subscriber is roaming.

One approach to addressing part of this problem is known from the PCT application No. WO 99/20065 (Ericsson) which teaches a new method of providing information about a called mobile subscriber's status in a mobile communications system. In particular to the problem that occurs when a caller is unable to determine whether the subscriber being called is either out of the service area or has merely switched off his or her mobile station (i.e. mobile phone). In this patent application, the problem is solved by adding a new parameter MSSTATUS to the IMSI. The MSSTATUS parameter indicates whether the mobile station is able to receive a call, is powered off (such as an IMSI detach) or out of the coverage area. The application further describes an interrogation facility which will give the caller the opportunity to receive information on the time and date of the detach, the reason for the unavailability of the mobile station, and also the location of the mobile station being called when detach occurred.

Another approach to the same problem is disclosed in PCT application No. WO 03/084260 (Nokia) in which the attainability status of a mobile terminal device (mobile station) is determined in a cellular communication network having a Short Message Service Centre. The Short Message Service Centre does this on request of an application by initiating a mobile terminated delivery attempt but not finishing the delivery attempt. The application is told if the HLR of a cellular network is reachable or not.

In another PCT application No. EP-A-1 309 211 (Samsung Electronics) a system and a method for checking the status of another party or the operational status of the mobile station is disclosed. The mobile station generates a status information packet (SIP) and broadcasts this status information packet over an Internet Protocol network. Other terminals connected to the IP network receive the status information packet and then ascertain the status of the broadcasting mobile station. Such a system adds overhead to the system since data packets are continually being sent throughout the network.

US Patent Application No. US 2002/0072352 (Jana et al) teaches a method and apparatus for querying the status of mobile subscribers. The communications network is provided with a so-called customer care server which has direct access to the VLR and a mobile telephone switching office (MTSO). As described above, the VLR contains information about subscribers visiting or roaming within the particular region serviced by the MTSO. A status information server has access to the customer care server and can be used to provide information to enquiries concerning the status and location of the mobile subscribers.

Another approach to the same problem is disclosed in international patent application WO-A-03/084260 (Nokia). This teaches a method and system for checking the attainability status of a mobile terminal device and then making a communication attempt with the mobile terminal device if the mobile terminal device is available. The method and system are used in a cellular communication network having the option to send short messages (SMS).

The cellular communications network has a short message service centre (SMSC) which manages and administers the short messages. In accordance with the teachings of this patent, the method is executed by querying the SMSC in the cellular network in order to obtain the attainability status of the mobile termination device. If the mobile terminal device is available, then a communications attempt is made to the mobile terminal device in accordance with the attainability status. The communications attempt can be one of a short message, fax, e-mail or phone call. If the attainability of the mobile terminal device is denied, then the communication attempt will not be delivered, or it will be at least postponed. If the attainability is confirmed then the communication attempt is at least tried.

The query that is made to the SMSC comprises a query of the Home Location Register (HLR) of the cellular communications network. By querying the HLR entries of the mobile terminal device, the MSC in which the mobile terminal device is actually located - or at least the MSC in which it was last detected - can be determined. This query is started either by the SMSC itself, by an application running on said SMSC, or by an application connected to the SMSC.

The system and method used in the patent is described as being useful if an application or a device wants to send a lot of short messages to various mobile terminal devices. The teachings of the patent can be used to find out which ones of the various mobile terminal devices are currently attainable and thus reduce the load on the network by not sending messages to those mobile terminal devices at which the message is not quickly delivered.

The method and system of the patent application is implemented by the addition of additional software to the existing SMSC. This requires the network operators to install new software (or update their existing software) and may also require substantial extra investment in hardware in order to perform the required functions.

The checking of the status of a subscriber in a cellular communications network is disclosed in their international patent application No. WO 01/56312 (Sonera). The patent application teaches a short message service platform (SP) to which a database (DB) is attached. The status of service subscribers to a service, such as the transmission of winning lottery numbers, is stored in the database. The status of the service subscribers is carried out by sending a query to the home location register (HLR). The query is carried out on a regular basis - such as every 24 hours - and if the HLR notifies that a certain subscriber no longer exists, then the service subscriber is eliminated from the database DB of the service platform SP. Alternatively, the service subscriber can be entered as blocked into the database DB.

The invention described in the Sonera patent is particularly useful for subscriptions to premium message-based services which attract premium pricing. The service provider can check whether the service subscriber actually exists and can also invoice the service subscriber at the appropriate time.

The invention described in the Sonera patent is restricted to a method for the checking of the validity of a subscription of a service subscriber in a telecommunications system. It simply uses the information provided in the HLR to check on the status of a telecommunications subscriber in order to determine whether the telecommunications subscriber's further subscription to - for example - a premium messaging system is valid. This enables the operator of the messaging system to check the validity of the subscription and carry out some form of credit control.

The Sonera patent requires the provision of a separate database at a short message service platform SP in order to record the status of the subscribers. This adds to the overhead at the service platform SP 122, especially if a number of different databases have to be provided.

Both the Sonera and the Nokia patents teach the use of the HLR to determine the status of the telecommunications subscriber. Their teachings are not applicable to the more general need to pass queries between different telecommunications networks, at least some of the queries being different than short message queries. Similarly the teachings do not describe the use of functions other than the querying of the known HLR.

A further related problem is that the network operator prefix previously used to determine the home network of any subscriber in a unique way, since the network operator would only issue MSISDNs with its respective network prefix. Today, in many countries telecommunication regulations have mandated the network operators to allow subscribers to take their MSISDNs along when they switch network operators, i.e. network operators must "port" numbers that originated from other network operators. In some countries more than 25% of all MSISDNs are ported.

Hence, there is currently a problem of how to determine the home network of a subscriber based on the knowledge of his/ her mobile phone number, i.e. MSISDN. A telecommunications company that wants to route a call, a fax or an SMS or wants to bill a subscriber for a service rendered, e.g. the sending of a Premium SMS, cannot do so without the knowledge of the subscriber's home network.

The previously known solutions for the determining of the home network of a subscriber
(a) have been based on trial and error, usually making the first communication or billing attempt to the "probable" network, and then trying other possible networks successively, or
(a) relied on local data bases (usually provided by the operators) that contained the MSISDNs of ported subscribers and the new homo network.

The general problem with the known methods is, however, the fact that they require multiple attempts (a), which generates additional costs and time delay, are not automatic over many networks (b), since number portability databases do not exist for all countries, or rely on information which is not always complete or up to date (c), since such data bases are generally not updated immediately after each subscriber change.

In document US 6 064 887, a telecommunications network is described, wherein a portability database is provided for storing the mobile subscriber relevant routing numbers.

Document US 6 343 318 describes a system having a distributed website between a client, a server and a web server. Queries can be generated by the client and the server.

In document WO 02/073470, a system of management of a network of data sources is known, wherein database queries are converted into network messages routed to the relevant data sources.

### Object of the Invention

The object of the invention is to eliminate the drawbacks referred to the above or at least significantly to alleviate them.

One specific object of the present invention is to disclose a method and a system which enable one, based purely on the knowledge of the mobile phone number (MSISDN) of a mobile station of a random subscriber of any of the various networks of an interlinked telecommunications system, to determine corresponding status information such as registration information, reception information and/ or location information.

It is also an object of the invention to provide a method using a standard web browser to access information about a mobile station.

It is furthermore an object of the invention to provide an efficient method of sending messages to mobile stations. In this context messages not only include short messages or multimedia messages, but any form of data transfer to the mobile station. Document US 2004/007 6139 discloses a method according to the preamble of claims 1.

### Brief Description of the Invention

The invention relates to a method for obtaining cross-network accessible information about a mobile station which comprises a first step of receiving the request for mobile station information at a query server a second step of defining one or more subqueries to access cross-network accessible information wherein the query server needs to be aware of a priority status of said inquert when generating the one or more subqueries a third step of transmitting said subqueries to locations storing said cross-network accessible information, a fourth step of returning responses to said subqueries; and finally a fifth step of returning said mobile station information generated from said responses.

The term "cross-network accessible information" refers to information which resides within an entity of one network and can be accessed from an entity of another network purely based on the connectivity of the two networks, i.e. without adding additional elements or reconfiguring of the network for the purpose of accessing said information. For example, it could be information that is accessible from one GSM network operated by a first network operator in another GSM networks operated by another network operator purely based on the mechanisms of the roaming connectivity. Such cross-network accessible information could be, but is not limited to, roaming information and/or interworking information. In this context "interworking information" is the information that is required for the exchange of network-related messages or other messages such as SMS between two networks.

The mobile station information returned could comprise status information, such as registration information, reception information or location information. Registration information would include whether a mobile phone is registered with a network operator, and, if yes, the name of the respective operator. Reception information would include whether a phone is turned on and has network reception, or turned off or outside the coverage area and which network the phone is currently roaming in. Location information is information about the location of the mobile station, which could include its current MSC/ VLR Service Area, its Location Areas, or its Cell.

The invention also comprises a method for sending a message using a delivery method that is dependent on the registration status, reception status or location of a mobile station.

The invention further provides for a query server comprising a query receiver for accepting a request and one or more subquery generators for generating one or more subqueries from the query. The subqueries are transmitted to one or more networks and one or more responses received from the one or more networks. A response generator is used to return a request response to the request from the one or more subquery responses.

The query server needs to be aware of a priority status of said request when generating the one or more subqueries.

The query server can include translation tables which are used to translate the request into the subqueries and translate the subquery responses received into useful information.

Furthermore the invention includes a first application program interface embodied on a computer-readable medium for execution on a computer in conjuntion with an application server comprising a request interface for accepting a request and a request response interface for returning a request response.

### Description of the Figures

Fig. 1 shows a basic overview of a public land mobile network.
Fig. 2 shows an overview of the invention.
Fig. 3 shows a detailed overview of the query server.
Fig. 4 shows an overview of a public land mobile network having a plurality of communication systems
Fig. 5a shows a signalling flow chart in accordance with one embodiment of the invention.
Fig. 5b shows a further signalling flow chart in accordance with another embodiment of the invention

### Detailed Description of the Invention

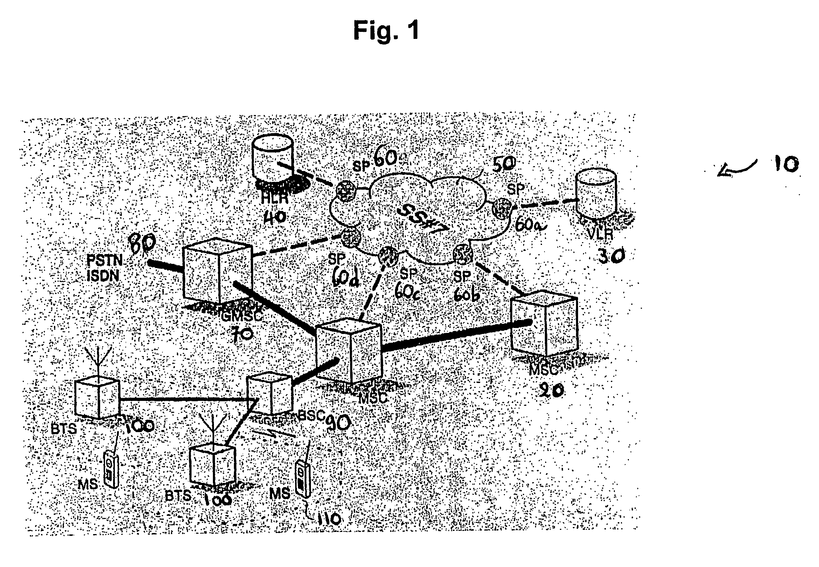

Fig. 1 shows the basic configuration of a public land mobile network 10 the mobile switching centres (MSC) 20, the visited location register (VLR) 30, the home location register (HLR) 40 and the Gateway MSC 70 are connected over a network 50. The network 50 is a SS#7 network in one embodiment of the invention with ports 60a-60e - so called signalling ports (SP) - to which the mobile switching centres 20, the visited location register 30, the home location register 40 and the gateway MSC 70 are connected.

The gateway MSC 70 is connected to a fixed line network 80 such as the public switched telephone network (PSTN) or the integrated services digital network (ISDN). Connection between other operators' mobile networks is provided through the fixed line network 80. The mobile switching centre 70 is connected to a base switching centre (BSC) 90 which is in turn connected to a base transceiver station (BTS) 100. Mobile stations 110 are in contact with the base transceiver station 100.

As described above, the home location register 40 and the visited location register 30 are databases which store details about the mobile stations 110 connected to the network 10 and other data. All transactions between the home location register 40 and the visited location register 30, such as searches or updates are handled user the so-called Mobile Application Part (MAP) over the network 50. Similarly when a mobile station 110 moves from one cell served by a first base transceiver station 100 to another cell served by a second base transceiver station 100, the handover is handled over the network 50. The functions of the mobile application part also include, but are not limited to, transactions related to the updating and deletion of location information in the visited location register 30, the updating of user profiles in the home location register 40.

Although this invention has been described with respect to the existing GSM network, it is envisaged that this invention will work on all types of wireless networks such as CDMA, TDMA, 3G and WIFI networks.

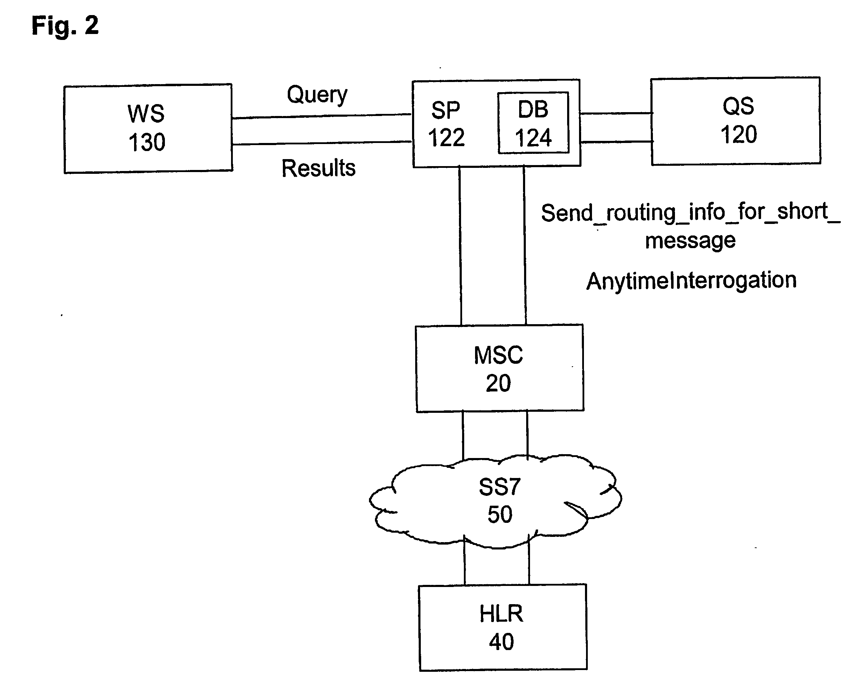

Attached to one of the mobile switching centres 20 is a query server 120 as is shown in Fig. 2. The query server 120 could also be attached to a gateway mobile switching centre 70 through a fixed line network 80 or could be incorporated into a mobile switching centre 20.The query server 120 includes a soft switch whose function it is to translate the protocols generated by the query server 120 to protocols used in the network. The function of the query server 120 will become clearer with reference to the examples.

Note that the basic configuration shown in Fig. 1 is only one embodiment of a public land mobile network. It is possible, for example, to have multiple visitor location registers 30, each of which is attached to one of the mobile switching centres 20. Similarly there could be multiple home location registers 40.

The query server 120 has a front end that is connected to a computer system or a computer network to provide a service platform SP 122 with a database DB 124. The front end allows access to the query server 120. In this example, the computer system used is a workstation 130 but this is not limiting of the invention. By way of example only, the query server 120 could be connected to the Internet and be accessed on a workstation 130 using a standard Internet browser, such as Microsoft's Internet Explorer. Using an application program running in the browser, a user at the workstation 130 can generate queries which are sent over the Internet using the IP protocol to the service platform SP 122 which processes them and relays them to the query server 120. The query server 120 transfer these queries into the appropriate format for the public mobile telephone network and then the soft switch (which can either be integrated into the query server 120 or be a separate entity) translates these into the appropriate protocol for passing to the mobile switching centre 20 and hence over the public mobile telephone network 50.

An example of a query which can be sent will now be illustrated with respect to Fig. 2. Let us suppose that a user at the workstation 130 wishes to know whether a particular mobile station 110 having a particular identification (in the GSM protocol this would be the mobile station ISDN number - MSISDN) is currently registered in any known wireless network (i.e. in "existence"), and, if yes, which network operator it is registered with (the so-called Home Network) and which country that operator is located at (the so-called Home Country).

The user at the workstation 130 issues a query request using an application running on the browser. The query request is passed to the service platform SP 122 and thence to the query server 120. The query server issues a MAP request
"send_routing_info_for_short_message" at its back-end interface (i.e. the connection to the mobile switching centre 20). The MAP level used is the highest possible. The MAP command is sent over the SS7 network 50 to the home location register 40 which returns a response.

Should the MAP request be successful, the response comprising the International Mobile Subscriber Identification (IMSI) and the mobile switching centre number in Global Title (GT) format will be returned from the SS7 network 50 to the query server 120. The IMSI number is in a format which delivers the mobile country code (MCC), i.e. in which country the mobile station 110 is registered, (e.g. Germany, UK or USA) and the Mobile Network Code (MNC), i.e. the home network operator of the subscriber, e.g. Vodafone or T-Mobile. The service platform SP 122 has access to a database 124 containing a list of countries and network operators and therefore the service platform SP 122 can determine the home country and the home network of the mobile station. This information can be passed back to the workstation 130 or other application.

The GT is a globally unique number which consists of the country code (e.g. 44 for the UK or 49 for Germany) followed by the operator code and a number identifying the MSC in which the mobile station 110 is present Using the database 124 associated with the query server 120, information about the current location of the mobile station 110 can therefore be returned from the analysis of the full GT. Alternatively, it may be adequate merely to return information about the current country and current operator on which the mobile station 110 is currently registered. On example of a GT is 49172220000222876 which indicates the German (code 49), Vodafone (code 172) network and one of the MSCs 20.

Suppose that the MAP request fails. In this case a response will be generated which will comprise an error code. This error code could either be from the network layer, i.e. a network error code, or from the MAP application layer, i.e. a MAP error code.

Of particular interest is the network error code "network timeout". In this case the MAP transaction could not be completed within a given time. Depending on the query issued by the query server 120, a result can be assembled from the MAP answer of the foreign network.

Two MAP error codes are of interest:
i) Unknown Subscriber. This indicates that the mobile station 110 to which the query has been sent is not registered with its home network as belonging to a valid subscriber.
ii) Absent subscriber. This indicates that the mobile station 110 is registered with its home mobile operator as belonging to a valid subscriber. However, the mobile station 110 is not logged onto the home network at the time of the query. This error says that no location information can be obtained since it is most likely that the mobile station 110 is switched off. However, the mobile station 110 probably belongs to a valid subscriber.

The MAP "send_routing_info_for_sm" command comes in two variations, priority 1 and priority 0. The reason for this is that as the home location register 40 is one of the most performance critical elements of the public land mobile network, certain vendor or network-specific measures exist to reduce the load on the home location register 40. So, for example, not all status changes are immediately reported in real time to the home location register 40. It is therefore possible that the command does not always reflect the true situation of the mobile station 110 at every point in time. Priority 1 is designed for priority or urgent messages and in this case the home location register 40 gives back the last valid data that it has recorded even if the current status of the mobile stations appears to indicate that the mobile station 110 is offline.

As a result when generating queries, the query server 120 needs to be aware of the priority status. A priority 0 request works well if the user at the workstation 130 wishes to know registration or reception information On the other hand, a priority 1 request is best used when the IMSI and location information are required (although, it will be understood that it is not certain that the mobile station 110 will be switched on in this case).

The invention described herewithin can be used for a number of queries and combinations of queries. Examples of these are given in the following Table 1.

**Table 1**

| **Information Type** | **Subquery Type** | **Answer options** |
|---|---|---|
| Registration information | Existence (of subscriber as active network customer) | « YES » or « No » |
| | Home Country | "MCC" or "unknown" |
| | Home Network Operator | "MNC" or "unknown" |
| Reception information | Network login status | "Idle", "Busy", "Detached" |
| | Network latency | "Roundtrip time" or "unknown" |
| Location information | Current Country | Country Prefix of GT of MSC or "unknown" |
| | Current Network Operator | "MNC" or "unknown" |
| | Current MSC Location | "GT of MSC" or "unknown" |
| | Current Cell Location | "Cell-ID" and/ or "Location Area-ID" |

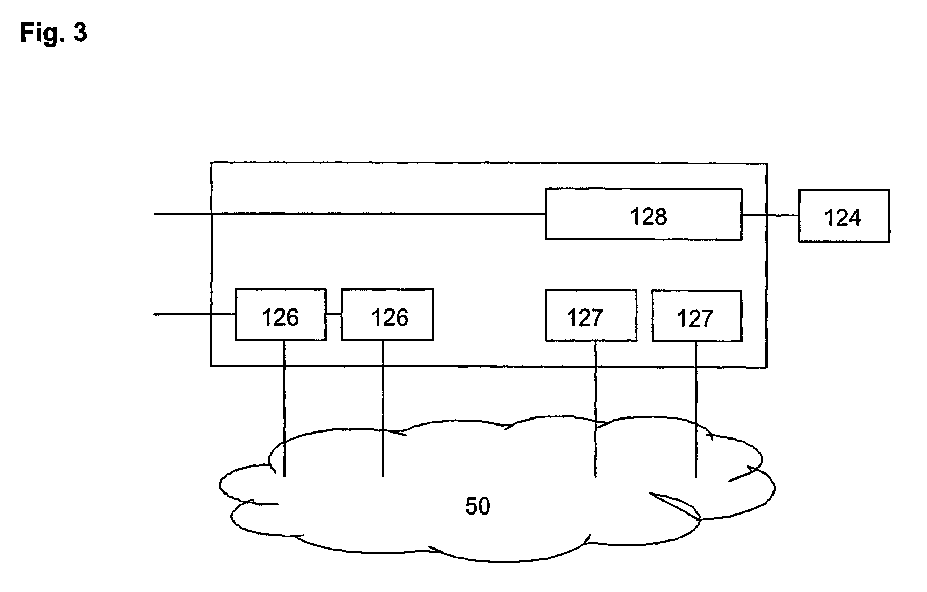

In a general implementation of the invention, the query server 120 can generate more than one request to the network 50. This might happen when more complex information is required than merely the status of the mobile station 110. In this case, the query server 120 is provided with one or more subquery generators 126 as shown schematically in Fig. 3. The subquery generators 126 accept the query request issued by the workstation 130 (or other computer network) and divides it out among one or more of the subquery generators 126. Each of the subquery generators 126 generates one or more subqueries (such as the ones given in Table 1) and passes them out to the network 50. The subquery generators 126 can pass the subqueries into different networks if this is required.

Responses are received from the network 50 by subquery receivers 127 which are then passed to a response generator 128 which processes the responses and, if necessary, accesses the databases 124. The response generator 128 returns a request response back to the workstation 130. A series of possible responses can be included in a translation table (or database) within the query server 120.

Translation of the query request into the one or more subqueries is carried out by a translation table within the query server 120.

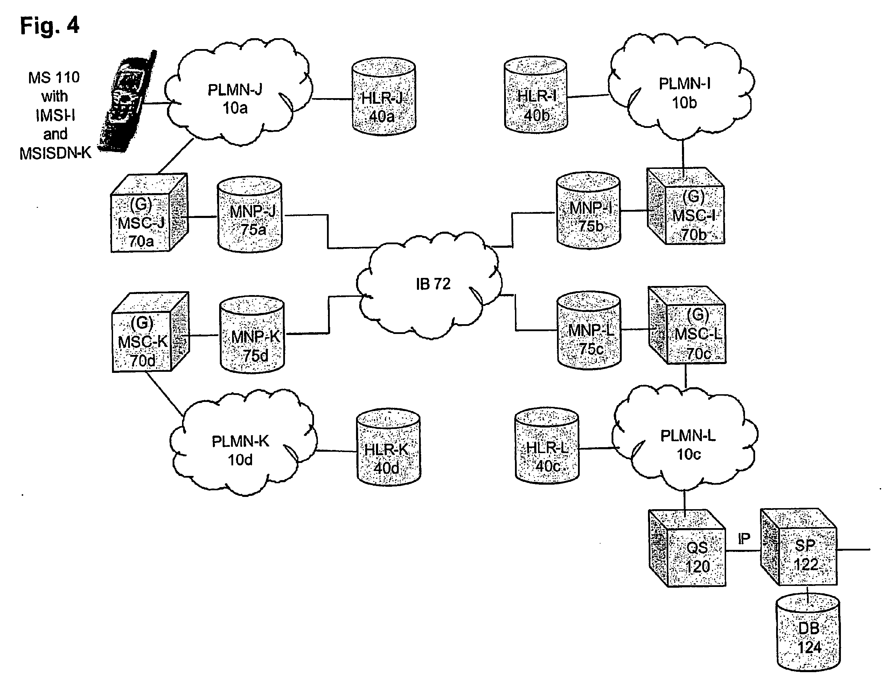

A system in accordance with the invention with a plurality of n communication systems PLMN-I 10b, PLMN-J 10a, PLMN-K 10d and PLMN-L 10c is shown in Fig. 4. In this example, four communication system are shown (i.e. n=4) but this is not limiting of the invention. The n communication system are mobile communication networks 10a - 10d. In order to be able to communicate with other mobile stations, each subscriber must register his mobile station with his home network, say PLMN-I. In order to be uniquely identifiable throughout every network PLMN-I to PLMN-L 10a-10d, the mobile station 110 of each subscriber receives a unique IMSI number IMSI-I. The IMSI-I is used only for authentication and routing purposes within the network of communication systems 10a-10d and is not used externally by other subscribers who wish to establish a communication link to the given subscriber's mobile station 110.

The mobile phone number used by a subscriber to set up a communication link to another subscriber's mobile station, i.e. the MSISDN, can have a random Mobile Network Code (MSC), e.g. of the network PLMN-K 10d (in which the network PLMN-K 10d is not the same as the same network as the network PLMN-I 10b), even if the mobile station with IMSI IMSI-I is registered with network PLMN-I 10b. Hence in this example the MSISDN of a mobile station 110 that contains the MNC of network PLMN-K 10d is MSISDN-K.

In Fig. 4 the mobile station 110 registered to network PLMN-I 10b with IMSI-I and MSISDN-K 10d is connected with another network PLMN-J 10a, e.g. by a radio link. In each ones of the communication networks PLMN-I to PLMN-L 10a-10d one finds the Gateway Mobile Switching Center (G-MSC-I, ..., G-MSC-L) 70a-70d which serves as a gateway from each of the communication networks PLMN-I to PLMN-L 10a-10d to an Interconnect Backbone (IB) 72 which is a system of connections that connects each of the gateway mobile switching centers G-MSC-I to G-MSC-L 70a-70d with each other, e.g. via connections that use the SS7 protocol stack. Between the Interconnect Backbone (IB) and each one of the gateway mobile switching centers G-MNC-I to G-MNC-L 70a-70d a Mobile Number Portability (MNP) system MNP-I to MNP-L 75a-75d is located which contains a table of all MSISDNs of the network that have been ported to another network, i.e. of all MSISDNs with the MNC of PLMN-J, but with corresponding IMSIs with a MNC of another network, and which reroutes queries regarding such a ported MSISDN to the network the MSISDN has been ported to.

Each one of the communication networks PLMN-I to PLMN-L 10a-10d is connected to a home location register HLR-I to HLR-K 40a - 40d and to various mobile switching centers (MSCs). Any given mobile station IMSI-I 100 connects to a network PLMN-J 10a via one of the MSCs connected to the respective network, e.g. MSC-J-L. Each home location register HLR-I 40 a stores data that are associated with the subscribers of the respective communication network PLMN-I 10b, i.e. "home network" PLMN-I 10b. These data include a table, in which each of the IMSI numbers IMSI-I is matched with its corresponding MSISDN number MSISDN-K, and the number of the MSC to which a given mobile stationIMSI-I is connected to at a given point in time. This MSC can be the MSC of the home network, e.g. with number MSC-I-L or, if the mobile station with the IMSI-I is at the given moment not connected to its home network PLMN-I 10b, but to another network PLMN-J 10a (i.e. is "roaming" in a "visited" network PLMN-J) the number of the MSC to which it is connected, e.g. MSC-J-L as well as the MNC of the visited network.

The query server 120 is connected to one of the networks, for example PLMN-L 10c. The query server 120 has a link to a service platform SP 122 as described above.

A number of Examples of the Invention will now be described.

### Example 1: "Existence" query

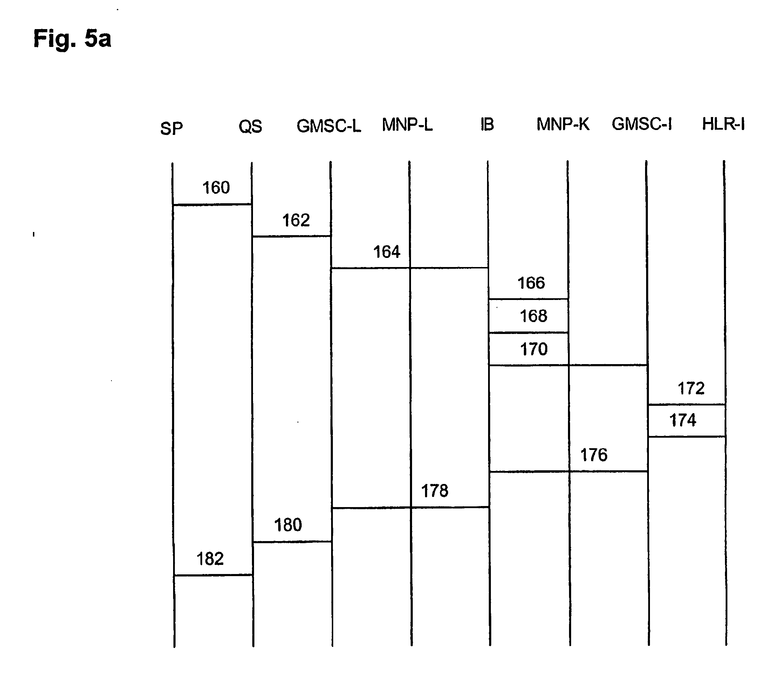

This example is shown in Fig. 5a. A service provider has a database containing MSISDN numbers of various customers that have subscribed to his services in the past. The service provider intends to send an SMS to every customer to inform him/ her about new services he offers. In order to avoid costs for sending of SMS to customers that are no longer subscribing to their mobile phone service, the service provider wants to know which of his customers are still actively subscribing to their phone services corresponding to the mobile phone numbers in its database and whether they might have switched their home operator. Hence, the only information he has about a client's mobile station 10 is the client's mobile phone number, i.e. the MSISDN number MSISDN-K, which can be any MSISDN associated with any mobile station registered with any network PLMN-I to PLMN-L 10a-10d.

The service provider sends a query to a service platform 122 giving it the MSISDN number MSISDN-K and asking for the "existence" of the corresponding subscriber. As shown by arrow 160, the service platform 122 sends an "Existence Query for MSISDN-K" to the query server 120.

In the following we assume without limitation of generality that PLMN-I - PLMN-K 10a-d are GSM networks using the MAP standard. The mechanism is similar for other network standards. The query server 120 then sends the standard MAP query "send_routing_info_for_short_message" to the GMSC GMSC-L 10c, arrow 162. The query is routed via the network 50 or the interconnect backbone 72 (arrow 164) to the mobile number portability system MNP-K 75d of the network PLMN-K 10d (arrow 166) which detects that MSISDN-K is a number that has been ported to the network PLMN-I. It then passes the query via the network 50 or the interconnect backbone 72 (arrow 168) to the GMSC GMSC-I 70b (arrow 170) which sends it to HLR-140b (arrow 172).

If the MSISDN-K corresponds to a valid subscriber, HLR-I 40b will look up the MSISDN and return the corresponding IMSI-I to the GMSC-I (arrow 174), which will relay it via the interconnect backbone IB 72 (arrow 176) to GMSC-L 70c (arrow 180). From here it will be passed to the query server 120 (arrow 180). The query server 120 converts the IMSI into the information "In Existence=Yes" and then passes this information on to the service platform 122 (arrow 182). The service platform 122 then relays the information on to the service provider.

If the MAP query "send_routing_info_for_short_message" is not successful, it will deliver on failure an error code that originates either from the network layer, i.e. a "network error code", or from the MAP application layer, i.e. a "MAP error code". The following network error code is of interest:
- Network timeout: in this case the MAP transaction could not be completed.

The request failed. In most cases, no answer can be given regarding the query. The following MAP error codes are of interest:
- "Unknown subscriber": in this case the mobile station 110 is not registered with its home network as belonging to a valid subscriber.
- "Absent subscriber": in this case the mobile station 110 is registered with its home network as belonging to a valid subscriber, however the mobile station 110 is not logged on to the network at the time of the query. This error says that no IMSI information is present (most likely due to a switched off mobile station 110), but shows that the mobile station 110 belongs to a valid subscriber.

The query server 120 then translates the error code "Absent subscriber" into the answer "In Existence=Yes" and returns either this error code or, in the case of the return of the error code "Unknown Subscriber" the error code "In Existence=No" to the service platform 122, which in turn relays it to the service provider.

Other cases for which the "Existence" query is useful include:
- Authentication applications, e.g. a phone user authenticates itself re a computer system: an important part of the authentication is to ensure that the phone number exists, i.e. is it registered with any network operator.
- Fraud detection for online or mobile payments e.g. using a very basic, but fast check: does the number exist? If yes, the payment transaction can procede.
- Authorization: Authorization shall only be given for existing phone numbers-The authorization can be used in various applications requiring more than one authorization mechanism, like access control, etc.
- To verify existing databases, e.g. databases of registered users or marketing related databases. Money is saved since no contact attempt is made to MSISDNs which are not in use anymore.
- Use in media applications, to verify, if an S MS might have come from a valid MSISDN, e.g. for voting applications, quizes, lotteries
- Use in betting applications, to verify, if an SMS can have come from a valid MSISDN, and hence, if the subscriber can be credited a prize.

### Example 2: "Home Network Operator" query, method 1

In this example, also shown in Fig. 5a, the service provider intends to send to one of his clients a Premium SMS that contains information the client has requested. The only information he has about the client's mobile station 110 is the client's mobile phone number, i.e. his MSISDN number MSISDN-K, which can be any MSISDN associated with any mobile station 110 registered with any network PLMN-I to PLMN-L 10a-10d. In order to send such a Premium SMS he needs to connect to the home network operator of the client. In order to establish such connection he needs to know which network operator is his client's home network operator.

The service provider hence sends a query to the service platform 122 giving it the MSISDN number MSISDN-K and asking for the MCC and MNC associated with this MSISDN. As shown by arrow 160, the service platform SP 122 sends a "Home Network Query for MSISDN-K" to the query server 120 asking the query server 120 to find out the MCC and MNC of the mobile station 110 with MSISDN MSISDN-K,. Since the mobile station 110 with MSISDN-K can be registered with any of the networks PLMN-1 to PLMN-L, the knowledge of the home network is not a-priori known.

In the following we assume without limitation of generality that PLMN-I-PLMN-K 10a-d are GSM networks using the MAP standard. The mechanism is similar for other network standards. The query server 120 then sends the standard MAP query "send_routing_info_for_short_message" to the GMSC GMSC-L 10c, arrow 162. The query is routed via the network 50 or the interconnect backbone 72 (arrow 164) to the mobile number portability system MNP-K 75d of the network PLMN-K 10d (arrow 166) which detects that MSISDN-K is a number that has been ported to the network PLMN-I. It then passes the query via the network 50 or the interconnect backbone 72 (arrow 168) to the GMSC GMSC-I 70b (arrow 170) which sends it to HLR-I 40b (arrow 172).

If the MSISDN-K corresponds to a valid subscriber, HLR-I 40b will look up the MSISDN and return the corresponding IMSI-I to the GMSC-I (arrow 174), which will relay it via the interconnect backbone IB 72 (arrow 176) to GMSC-L 70c (arrow 178). From here it will be passed to the query server 120 (arrow 180), which then passes it on to the service platform 122 (arrow 182), which extracts the MCC and the MNC from the IMSI IMSI-I and compares it with a given lookup table in the database 124 to generate the name of the country and the network. This information is then passed on to the service provider.

If the MAP query "send_routing_info_for_short_message is not successful, an error code will be generated similar to the example shown in Fig. 5a and returned to the query server 120. The query server 120 will then return the information "Unknown subscriber" or "Absent subscriber" to the service platform SP which will pass this information instead of the MCC and MNC to the service provider.

Other cases for which the "Home Network Operator" query is useful include:
- For SMS routing, including for premium SMS services, which need to be handled directly through the home operator (and which needs to be known upfront)
- For routing of other mobile data services, e.g. via GPRS, W-LAN, UMTS
- For billing through the home network operator: Finding the correct home network operator to send the billing records to (especially for Premium SMS, reverse billing, direct charging, etc). This is becoming increasingly important as all these types of services are rapidly growing.
- To provide context-sensitive mobile services to end-users, e.g. only providing end-users with data or services, when they are in their home network, or when they leave their home network, e.g. travel services, traffic information, guide services, exchange rate information, help desk, translation services via voice, etc.
- Context sensitive configuration of assets, e.g. having different functionality in the home network than in foreign networks (phones, wireless network enabled PCs, smart handsets, all other wireless enabled devices)

### Example 3: "Home Network Operator" query, method 2

Another way in which the home network operator of the mobile station 110 can be detected comes from the analysis of the SCCP routing envelope returned from the MAP query "send_routing_info_for_short_message" (as discussed above). The routing envelope gives the called to and called from address. An example of the routing envelope would include the addresses from 491722800000 to 447624955555 which are the global titles respectively of the sender and the recipient

Analysis of the global titles in the routing envelope allows the service platform 122 to look up the GT prefix (e.g. 49172) in the database 124 and identify the home network of the mobile station.

One illustrative example of this occurs when a number is ported from Vodafone Germany to E-Plus in Germany. A MAP query "send_routing_info_for_ short_message" is sent to that MSISDN. The response to the MAP query is a message which says "Absent Subscriber". Analysis of the SCCP calling address field in the SCCP envelope to the MAP answer includes the GT of EPlus in Germany. As a result the service platform 122 can determine the new home network of the mobile station 110.

This example also works with other MAP requests such as "send_IMSI", since analysis is primarily done on seep level and to MAP data payload.
Therefore every command being known to be answered by any element of a MSISDN's home network is suitable for this kind of query. The advantage is that this method works robustly in every GSM network (since it does not rely on MAP data payload) and in many cases even works if active filters such as SMS filters are implemented in the network.

### Example 4: "Current MSC Location" query

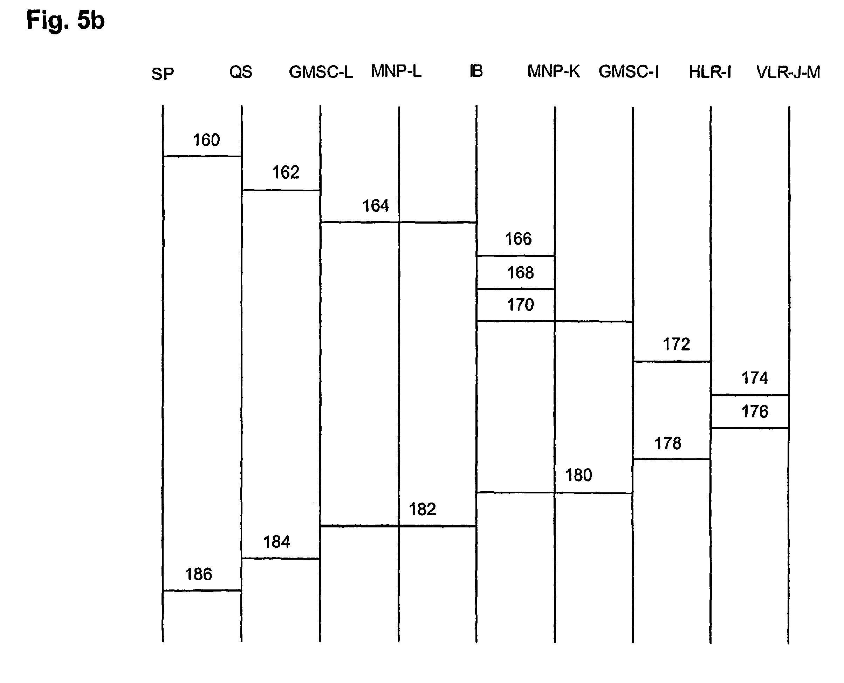

In the example shown in Fig. 5b a company owning a fleet of vehicles, e.g. cars or lorries, wants to electronically track its fleet, e.g. via a computer that is connected to the internet, in order to e.g. optimize the route planning. The information requested at periodic intervals of, say every hour, is the town on which each vehicle of the fleet is located or it is proximate to. The driver of each vehicle is equipped with a mobile phone, whose MSISDN numbers are stored in the company's database. These MSISDN numbers may belong to mobile stations 110 whose SIM cards are registered with one and the same mobile network or several different mobile networks. The only information the company has, however, are the MSISDN numbers.

To track an individual vehicle, say with MSISDN number MSISDN-K, which can be any MSISDN associated with any mobile station 110 registered with any network PLMN-I to PLMN-K 10a-10d, the company sends a query to the service platform SP 122 giving it the MSISDN number MSISDN-K and asking for the "Current MSC Location" of the corresponding subscriber. As shown by arrow 160, the service platform SP sends a "Current MSC Location Query for MSISDN-K" to the query server 120.

In the following we assume without limitation of generality that PLMN-I to PLMN-L 10a - 10d are GSM networks using the Mobile Application Protocol (MAP) standard. The mechanism is similar for other network standards. The query server then sends the standard MAP query "send_routing_info_for_short_message" to the GMSC GMSC-L, arrow 162. The query is routed via the network 50 or the interconnect backbone 72 (arrow 164) to the mobile number portability system MNP-K 75d of the network PLMN-K 10d (arrow 166) which detects that MSISDN-K is a number that has been ported to the network PLMN-I. It then passes the query via the network 50 or the interconnect backbone 72 (arrow 168) to the GMSC GMSC-I 70b (arrow 170) which sends it to HLR-I 40b (arrow 172).

If the MSISDN-K corresponds to a valid subscriber, HLR-I 40b will look up the MSISDN and determine the corresponding IMSI-I. As defined in the GSM standards, a VLR will inform the HLR of a MS at a point in time at which it is roaming into a new VLR service area/ MSC area (arrow 176), hence the HLR contains the GT of the current or last known MSC corresponding to the VLR area, say VLR-J-M. Hence HLR-I 40b will return the IMSI-I as well as the GT of MSC-J-M to the GMSC-I (arrow 178), which will relay it via the network 50 or interconnect backbone IB (arrow 180) to GMSC-L (arrow 182). From here it will be passed to the query server 120 (arrow 184). The query server 120 passes it on to the service platform 122 (arrow 186). The service platform 122 then looks up e.g. the name of the respective city/ part of city or the geographic coordinates of the center of the corresponding MSC area on the database DB 124 and passes this information on to the company's server.

If the MAP query "send_rouung_info_for_short_message is not successful, an error code will be generated similar to the example described in Example 1 and returned to the query server 120. The query server 120 will then return the information "Unknown subscriber" or "Absent subscriber" to the service platform 122 which will pass this information instead of the location data to the service provider.

Other cases for which the "Current MSC Location" query is useful include:
- Tracing and tracking of mobile goods and assets, such as trucks, cars, lorries, trains, boats
- Telematics
- Surveillance
- End-user applications, like friend-finder, dating services, matchmaking services.

### Example 5: "Current Cell Location" query

The example in Fig. 5b shows a further example of a mechanism to obtain location information.

In the following we assume without limitation of generality that PLMN-I to PLMN-L 10a - 10d are GSM networks using the MAP standard. The mechanism is similar for other network standards. The query server then sends the standard MAP query "AnytimeInterrogation" to the GMSC GMSC-L 70c, arrow 162. The query is routed via the network 50 or interconnect backbone 72 (arrow 164) to the mobile number portability system MNP-K 75d of the network PLMN-K 10d (arrow 166) which detects that MSISDN-K is a number that has been ported to the network PLMN-I. It then passes the query via the network 50 or the interconnect backbone 72 (arrow 168) to the GMSC GMSC-I 70b (arrow 170) which sends it to HLR-I 40b (arrow 172).

The HLR-I 40b passes the request to the servicing VLR VLR-J-M (arrow 174) for that subscriber and replies to the AnytimeInterrogation with the information retrieved. The information relayed back (arrow 176) is network-dependent, but may consist of location data in the form of cell identifiers such as the CellID or the Location Area. From here it will be passed back via the GMSC-I (arrow 178), the network 50 or the interconnect network 72 (arrow 180), the GMSC-L (arrow 182) and the query server (arrow 184) to the service platform 122 (arrow 186). The service platform 122 then looks up e.g. the geographic coordinates of the center of the corresponding call or location area and then relays the information on to the service provider.

If the MAP query "AnyTimeInterrogation" is not successful, an error code will be generated similar to the one describe in Example 1 for the "send_routing_info_for_ short_message" query and returned to the query server 120. The query server 120 will then return the information "Unknown subscriber" or "Absent subscriber" to the service platform 122 which will pass this information instead of the location data to the fleet management operator.

### Example 6: "Network-login status" query

In this example, also shown in Fig. 5b, a provider of an instant messaging platform (e.g. AOL's AIM service) wants to offer its online customers the possibility to exchange messages with other customers of the service even when they do not have online access to their PC. Similar to the "online-presence" indicator, he wants to integrate a "mobile-presence" indicator into his platform, which shows whether the mobile station 110 of a random customer (which can be subscriber of any mobile network) is "idle", "busy" or "detached".

To find out the network-login status of a mobile station 10 with MSISDN MSISDN-K, the instant messaging provider sends a query to the service platform 122 giving it the MSISDN number MSISDN-K and asking for the "network-login status" of the corresponding subscriber. As shown by arrow 160, the service platform 122 sends a "Network-login status Query for MSISDN-K" to the query server 120.

Again we assume that both PLMN-I to PLMN-L 10a - 10d are GSM networks using the MAP standard. The mechanism is similar for other network standards. As shown in Fig. 5b the query server 120 then sends the standard MAP query "AnytimeInterrogation" to the GMSC GMSC-L 70c, arrow 162. The query is routed via the network 50 or interconnect backbone IB 72 (arrow 164) to the mobile number portability system MNP-K 75d of the network PLMN-K 10d (arrow 166) which detects that MSISDN-K is a number that has been ported to the network PLMN-I. It then passes the query via the network 50 or the interconnect backbone 72 (arrow 168) to the GMSC GMSC-I 70b (arrow 170) which sends it to HLR-I 40b (arrow 172). The HLR-I 40b passes the request to the servicing VLR VLR-J-M (arrow 174) for that subscriber and replies to the AnytimeInterrogation with the information retrieved. The information relayed back (arrow 176) is network-dependent but often consists of current network-login information ("idle", "busy", "detached"). From here it will be passed back via the GMSC-I (arrow 178), the network 50 or the interconnect network 72 (arrow 180), the GMSC-L (arrow 182) and the query server (arrow 184) to the service platform 122 (arrow 186). The service platform 122 then relays the information on to the instant messaging provider.

If the MAP query "AnyTimeInterrogation" is not successful, an error code will be generated similar to the one described in Example 1 for the "send_routing_info_for_ short_message" query and relayed to the query server 120. The query server 120 will then return the information "Unknown subscriber" or "Absent subscriber" to the service platform 122 which will pass this information instead of the network-login status data to the instant messaging provider.

## Claims

1. Method for obtaining mobile station information of a mobile station (110), said mobile station information being status information of said mobile station, the method comprising:
- receiving a request for mobile station information at a query server (120);
- defining one or more subqueries in the query server (120) to access the mobile station information, wherein the query server needs to be aware of a priority status of said request when generating the one or more subqueries;
- transmitting said subqueries to locations storing said mobile station information;
- returning responses to said subqueries to the query server (120);
- returning mobile station information generated from said responses in the query server, wherein the mobile station information is cross-network accessible information about the mobile station.

2. The method according to claim 1, wherein the mobile station information includes one of a home network operator information about a home network operator of the mobile station and of location information about a location of the mobile station.

3. The method according to claim 1 or 2, the mobile station information being home network operator information, wherein the returned responses comprise a routing envelope.

4. The method according to claim 3, wherein the routing envelope is a SS7 SCCP routing envelope.

5. The method according to claim 3 or 4, wherein the routing envelope comprises an address.

6. The method according to claim 5, wherein the address includes a global title component of the home network operator.

7. The method according to any one of claims 2 to 4, wherein the method further comprises the step of determining a new home network operator in dependence of the routing envelope.

8. The method according to any one of the claims 1 to 7, wherein the analyzing said returned responses comprises a look-up in a database (124).

9. Method according to claim 2, the mobile station information being location information about a location of the mobile station (110), comprising
a step of using the returned responses to look up in a location database the location information.

10. The method of claim 9, wherein the returned responses comprise details of an MSC area of the mobile station.

11. The method according to one of claim 9 to 10, wherein the request comprises the MSISDN number of the mobile station (110).

12. The method according to one of claims 9 to 11, wherein the look up in a location database comprises looking up the cell location.

13. A query server (120) for the determination of mobile station information of a mobile station, said mobile station information being status information of said mobile station, the query server (120) comprising:
- a query receiver for accepting a request for the mobile station information;
- one or more subquery generators (126) for generating one or more subqueries from the query;
- one or more subquery transmitters (126) for submitting the one or more subqueries to one or more networks (50);
- one or more subquery receivers (127) for receiving one or more subquery responses from the one or more networks (50); and
- a response generator (128) for analyzing the one or more subquery responses to determine the mobile station information, **characterized in that** the mobile station information is cross-network accessible information about the mobile station, and wherein the query server needs to be aware of a priority status of said request when generating the one or more subqueries.

14. A query server (120) according to claim 13, wherein the mobile station information is one of home network operator information about a home network of the mobile station and of location information about the location of the mobile station.

15. The query server (120) of claim 14, the mobile station further comprising a look-up table storing MSC areas and corresponding locations.

16. A computer-readable medium having computer-executable instruction for a program comprising code means adapted to perform the steps of a method according to claims 1 to 12.

17. An application server (130) for accessing the query server (120) of one of claims 13 to 15 adapted for passing a request about information relating to a mobile station (110) to the query server (120) and for receiving a request response from the query server (120) concerning the information relating to the mobile station (110).

18. An application program interface embodied on a computer-readable medium comprising code means adapted for execution on a computer in conjunction with the application server (130) of claim 17, the application program interface comprising:
- a request interface for accepting a request;
- a request response interface for returning a request response, the request response being generated from one or more subqueries received from one or more second networks in response to the submission of one or more subqueries to one or more networks.

19. The application program interface of claim 18, wherein the request interface is an interface for accepting a request about the network login status of a mobile station (110) and the request response interface is an interface for returning a response about the network login status of the mobile station (110).

## Patentansprüche

1. Verfahren zum Erhalten von Mobilstationinformationen einer Mobilstation (110), wobei die Mobilstationinformationen Statusinformationen der Mobilstation sind und wobei das Verfahren umfasst:
- Empfangen einer Anfrage für Mobilstationinformationen an einem Anfrageserver (120);
- Definieren einer oder mehrerer Unteranfragen in dem Anfrageserver (120) um zu den Mobilstationinformationen Zugang zu erlangen, wobei dem Anfrageserver ein Prioritätsstatus der Anfrage bekannt sein muss, wenn die eine oder mehrere Unteranfragen generiert werden;
- Übermitteln der Unteranfragen an Lokationen, welche die Mobilstationinformationen speichern;
- Zurückgeben von Antworten auf die Unteranfragen an den Anfrageserver (120);
- Zurückgeben der Mobilstationinformationen, welche durch die Antworten im Anfrageserver generiert worden sind, wobei die Mobilstationinformationen Kreuznetzwerkzugangsinformationen über die Mobilstation sind.

2. Verfahren nach Anspruch 1, bei der die Mobilstationinformationen eine von Heimnetzwerkbetreiberinformationen über einen Heimnetzwerkbetreiber der Mobilstation bzw. Ortsinformationen über einen Ort der Mobilstation aufweist.

3. Verfahren nach Anspruch 1 oder 2, bei dem die Mobilstationinformationen Heimnetzwerkbetreiberinformationen sind, wobei die zurück gegebenen Antworten eine Routing-Hülle umfassen.

4. Verfahren nach Anspruch 3, bei dem die Routing-Hülle eine SS7 SCCP Routing-Hülle ist.

5. Verfahren nach Anspruch 3 oder 4, bei dem die Routing-Hülle eine Adresse umfasst.

6. Verfahren nach Anspruch 5, bei dem die Adresse eine Global-Titel-Komponente des Heimnetzwerkbetreibers aufweist.

7. Verfahren nach einem der Ansprüche 2 bis 4, bei dem das Verfahren weiterhin den Schritt des Feststellens eines neuen Heimnetzwerkbetreibers in Abhängigkeit von der Routing-Hülle umfasst.

8. Verfahren nach einem der Ansprüche 1 bis 7, bei dem das Analysieren der zurück gegebenen Antworten eine Suche in einer Datenbank (124) umfasst.

9. Verfahren nach Anspruch 2, bei dem die Mobilstationinformationen, welche Ortsinformationen über einen Ort der Mobilstation (110) sind, einen Schritt umfassen zur Verwendung der zurück gegebenen Antworten um in einer Ortsdatenbank die Ortsinformationen ab zu fragen.

10. Verfahren nach Anspruch 9, bei dem die zurück gegebenen Antworten Details eines MSC-Bereichs der Mobilstation umfassen.

11. Verfahren nach einem der Ansprüche 9 oder 10, bei dem die Anfrage die MSISDN-Nummer der Mobilstation (110) umfasst.

12. Verfahren nach einem der Ansprüche 9 bis 11, bei dem die Suche in einer Ortsdatenbank das Abfragen des Zellenortes umfasst.

13. Anfrageserver (120) für die Feststellung von Mobilstationinformationen einer Mobilstation, wobei die Mobilstationinformationen Statusinformationen der Mobilstation sind und wobei der Anfrageserver (120) umfasst:
- Einen Anfrageempfänger zur Entgegennahme einer Anfrage für die Mobilstationinformationen;
- Einen oder mehrere Unteranfragegeneratoren (126) zum Generieren von einer oder mehrerer Unteranfragen der Anfrage;
- Einen oder mehrere Unteranfrageübermittler (126) zur Übermittlung der einen oder mehreren Unteranfragen an ein oder mehrere Netzwerke (50);
- Einen oder mehrere Unteranfrageempfänger (127) zum Empfang einer oder mehrerer Unteranfrageantworten von dem einen oder mehreren Netzwerken (50); und
- Einen Antwortgenerator (128) zum Analysieren der einen oder mehreren Unteranfrageantworten um die Mobilstationinformationen festzustellen, **dadurch gekennzeichnet, dass**
die Mobilstationinformationen Kreuznetzwerkzugangsinformationen über die Mobilstation sind und wobei der Anfrageserver einen Prioritätsstatus der Anfrage kennen muss, wenn die eine oder mehrere Unteranfragen generiert werden.

14. Anfrageserver (120) nach Anspruch 13, bei dem die Mobilstationinformationen eine von Heimnetzwerkbetreiberinformationen über ein Heimnetzwerk der Mobilstation bzw. Ortsinformationen über einen Ort der Mobilstation aufweist.

15. Anfrageserver (120) nach Anspruch 14, bei dem die Mobilstation weiterhin eine Abfragetabelle umfasst, welche MSC-Bereiche und korrespondierende Orte speichert.

16. Computerlesbares Medium, welches computerausführbare Instruktionen hat, für ein Programm, welches Codemittel umfasst, welche dazu angepasst sind die Schritte eines Verfahrens nach den Ansprüchen 1 bis 12 auszuführen.

17. Applikationsserver (130) zum Zugreifen auf den Anfrageserver (120) von einem der Ansprüche 13 bis 15, welche dazu angepasst ist eine Anfrage über Informationen bezüglich einer Mobilstation (110) an den Anfrageserver (120) weiter zu geben und zum Empfangen einer Anfrageantwort von dem Anfrageserver (120) die Informationen bezüglich der Mobilstation (110) betreffend.

18. Applikationsprogrammschnittstelle verkörpert auf einem computerlesbaren Medium umfassend Codemittel angepasst zur Ausführung auf einem Computer in Verbindung mit dem Applikationsserver (130) des Anspruches 17, wobei die Applikationsprogrammschnittstelle umfasst:
- Eine Anfrageschnittstelle zur Annahme einer Anfrage;
- Eine Anfrageantwortschnittstelle zum Zurückgeben einer Anfrageantwort, wobei die Anfrageantwort aus einer oder mehrerer Unteranfragen generiert wird, welche von einem oder mehreren zweiten Netzwerken als Folge der Übermittlung von einer oder mehrere Unteranfragen an ein oder mehrere Netzwerke empfangen wird.

19. Applikationsprogrammschnittstelle des Anspruches 18, bei der die Anfrageschnittstelle eine Schnittstelle zur Annahme einer Anfrage über den Netzwerk-Login-Status einer Mobilstation (110) ist und die Anfrageantwortschnittstelle eine Schnittstelle zum Zurückgeben einer Antwort über den Netzwerk-Login-Status der Mobilstation (110) ist.

## Revendications

1. Procédé d'obtention d'information de station mobile d'une station mobile (110), l'information de station mobile étant une information de statut de la station mobile, le procédé comprenant les étapes consistant à :
recevoir une requête d'information de station mobile à un serveur d'interrogation (120) ;
définir une ou plusieurs sous-requêtes dans le serveur d'interrogation (120), pour obtenir l'information de station mobile, le serveur d'interrogation devant être au courant d'un statut de priorité de la requête en engendrant la une ou plusieurs sous-requêtes ;
transmettre les sous-requêtes à des emplacements mémorisant l'information de station mobile ;
renvoyer, au serveur d'interrogation (120), des réponses aux sous-requêtes ;
renvoyer l'information de station mobile engendrée par lesdites réponses dans le serveur d'interrogation, l'information de station mobile étant une information accessible de réseaux croisées sur la station mobile.

2. Procédé selon la revendication 1, dans lequel l'information de station mobile inclut l'une d'une information d'opérateur de réseau domestique sur un opérateur de réseau domestique de la station mobile et d'une information d'emplacement sur un emplacement de la station mobile.

3. Procédé selon la revendication 1 ou 2, l'information de station mobile étant l'information d'opérateur de réseau domestique, les réponses renvoyées comprenant une enveloppe de routage.

4. Procédé selon la revendication 3, dans lequel l'enveloppe de routage est une enveloppe de routage SS7 SCCP.

5. Procédé selon la revendication 3 ou 4, dans lequel l'enveloppe de routage comprend une adresse.

6. Procédé selon la revendication 5, dans lequel l'adresse inclut un composant de titre global de l'opérateur de réseau domestique.

7. Procédé selon l'une quelconque des revendications 2 à 4, dans lequel le procédé comprend, en outre, l'étape consistant à déterminer un nouvel opérateur de réseau domestique, en fonction de l'enveloppe de routage.

8. Procédé selon l'une quelconque des revendications 1 à 7, dans lequel l'analyse des réponses renvoyées comprend une vérification dans une base de données (124).

9. Procédé selon la revendication 2, l'information de station mobile étant l'information d'emplacement sur un emplacement de la station mobile (110), comprenant une étape consistant à utiliser les réponses renvoyées pour consulter, dans une base de données d'emplacement, l'information d'emplacement.

10. Procédé selon la revendication 9, dans lequel les réponses renvoyées comprennent des détails d'une zone MSC de la station mobile.

11. Procédé selon l'une quelconque des revendications 9 à 10, dans lequel la requête comprend le numéro MSISDN (RNIS) de la station mobile (110).

12. Procédé selon l'une des revendications 9 à 11, dans lequel la consultation dans une base de données d'emplacement comprend la consultation d'emplacement de cellule.

13. Serveur d'interrogation (120) pour la détermination d'information de station mobile d'une station mobile, l'information de station mobile étant une information de statut de la station mobile, le serveur d'interrogation (120) comprenant :
un récepteur d'interrogation pour accepter une requête d'information de station mobile ;
un ou plusieurs générateurs de sous-interrogation (126), pour engendrer une ou plusieurs sous-requêtes depuis la requête ;
un ou plusieurs émetteurs (126) pour soumettre la une ou plusieurs sous-requêtes à un ou plusieurs réseaux (50),
un ou plusieurs récepteurs de sous-requête (127), pour recevoir une ou plusieurs réponses de sous-requête depuis l'un ou plusieurs réseaux (50) ; et
un générateur de réponse (128), pour analyser la une ou plusieurs réponses de sous-requêtes, afin de déterminer l'information de station mobile, **caractérisé en ce que** l'information de station mobile est une information accessible de réseaux croisés sur la station mobile, et dans lequel le serveur d'interrogation doit être au courant d'un statut de priorité de ladite requête lors de la génération de la une ou plusieurs sous-requêtes.

14. Serveur d'interrogation (120) selon la revendication 13, dans lequel l'information de station mobile est l'une d'une information d'opérateur de réseau domestique sur un réseau domestique de la station mobile et d'une information d'emplacement sur l'emplacement de la station mobile.

15. Serveur d'interrogation (120) selon la revendication 14, la station mobile comprenant, en outre, une table de consultation mémorisant des zones MSC et des emplacements correspondants.

16. Support lisible par ordinateur ayant des instructions exécutables par ordinateur pour un programme comprenant des moyens de code adaptés pour réaliser les étapes d'un procédé selon l'une des revendications 1 à 12.

17. Serveur d'application (130) pour accéder au serveur d'interrogation (120) selon l'une des revendications 13 à 15, adapté pour passer, au serveur d'interrogation (120), une requête d'information ayant trait à une station mobile (110), et pour recevoir une réponse de requête, depuis le serveur d'interrogation (120), concernant l'information ayant trait à la station mobile (110).

18. Interface de programme d'application contenue dans un support lisible par ordinateur comprenant des moyens de code adaptés pour l'exécution sur un ordinateur conjointement avec le serveur d'application (130) de la revendication 17, l'interface de programme d'application comprenant :
une interface de requête pour accepter une requête ;
une interface de réponse de requête pour renvoyer une réponse de requête, la réponse de requête étant engendrée à partir d'une ou plusieurs sous-requêtes reçues depuis un ou plusieurs deuxièmes réseaux en réponse à la soumission au un ou plusieurs réseaux d'une ou plusieurs sous-requêtes.

19. Interface de programme d'application selon la revendication 18, l'interface de requête étant une interface pour accepter une requête sur un statut de connexion de réseau d'une station mobile (110), et l'interface de réponse de requête étant une interface pour renvoyer une réponse sur le statut de connexion de réseau de la station mobile (110).
